# EUROPÄISCHE PATENTSCHRIFT

(11) **EP 3 138 719 B1**
(45) Veröffentlichungstag und Bekanntmachung des Hinweises auf die Patenterteilung: **29.01.2020**
(21) Anmeldenummer: 16178382.4
(22) Anmeldetag: 07.07.2016
(51) Int. Cl.: B60K 17/28

(54) **ANTRIEBSVORRICHTUNG EINER ZAPFWELLE**
DRIVE DEVICE FOR THE DRIVE OF A PTO SHAFT
DISPOSITIF D'ENTRAINEMENT D'UNE PRISE DE FORCE

(30) Priorität: 04.09.2015 DE 102015217007
(43) Veröffentlichungstag der Anmeldung: 08.03.2017
(73) Patentinhaber: ZF Friedrichshafen AG, 88046 Friedrichshafen (DE)
(72) Erfinder: Ziegler, Johannes, 88524 Uttenweiler (DE); Fischer, Walter, 88045 Friedrichshafen (DE)

(56) Entgegenhaltungen:
- EP-A1- 0 511 480
- EP-A1- 2 153 087
- EP-A2- 1 798 096
- EP-A2- 2 853 431
- DE-C- 948 763
- GB-A- 2 111 926
- US-A1- 2002 043 121

## Beschreibung

Die vorliegende Erfindung betrifft eine Antriebsvorrichtung einer Zapfwelle nach der im Oberbegriff von Anspruch 1 näher definierten Art.

Gattungsgemäße Antriebsvorrichtungen für eine Zapfwelle, insbesondere für Schmalspurtraktoren, weisen einen Zapfwellenstummel auf, welcher sowohl als Motorzapfwelle als auch Wegzapfwelle verwendet werden kann. Bei Verwendung des Zapfwellenstummels als Motorzapfwelle wird der Zapfwellenstummel mit dem Antriebsmotor, beispielsweise einem Dieselmotor, gekoppelt und weist somit eine vom Dieselmotor abhängige Drehzahl auf. Bei Verwendung des gemeinsamen Zapfwellenstummels als Wegzapfwelle wird der Zapfwellenstummel mit dem Antriebsstrang zum Antrieb der Hinterachse verbunden und weist somit eine Drehzahl in Abhängigkeit der Drehzahl der Hinterräder auf.

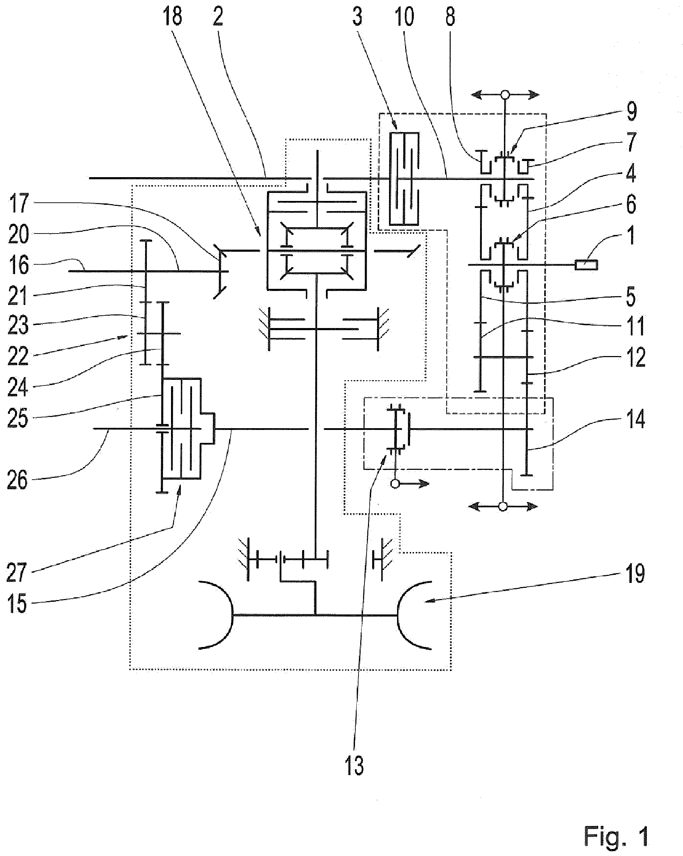

Die WO9204561A1 offenbart insbesondere in Figur 1 eine Antriebsvorrichtung einer Zapfwelle, bei welcher der Zapfwellenstummel sowohl als Motorzapfwelle als auch als Wegzapfwelle verwendbar ist, wobei Schaltvorrichtungen angeordnet sind, mittels welchen der Zapfwellenstummel einerseits mit dem Antriebsmotor und andererseits mit dem Fahrantriebsstrang zu den Hinterrädern verbindbar ist.

Die GB2111926A, die EP1798096A2 und die US2002/0043121A1 offenbaren eine gattungsgemäße Antriebsvorrichtung einer Zapfwelle welche im Sinne einer Wegzapfwelle und einer Motorzapfwelle betreibbar ist.

Der vorliegenden Erfindung liegt die Aufgabe zugrunde, eine Antriebsvorrichtung einer Zapfwelle zu schaffen, welche eine möglichst geringe Komponentenanzahl aufweist, vorzugsweise vier Stufen als Motorzapfwelle und zwei Stufen als Wegzapfwelle aufweist, und so kompakt ausgeführt ist, dass es in einem Schmalspurtraktor verwendbar ist.

Die Aufgabe wird mit einer auch die kennzeichnenden Merkmale des Hauptanspruchs aufweisenden gattungsgemäßen Antriebsvorrichtung für eine Zapfwelle gelöst.

Erfindungsgemäß weist die Antriebsvorrichtung einer Zapfwelle eine erste Schaltvorrichtung auf, über welche die Zapfwelle im Sinne einer Motorzapfwelle mit einer ersten Eingangswelle verbindbar ist, wobei die erste Eingangswelle so mit dem Antriebsmotor, beispielsweise einem Dieselmotor, verbindbar ist, dass die Zapfwelle als Motorzapfwelle betrieben wird. Zusätzlich weist die Antriebsvorrichtung der Zapfwelle eine zweite Schaltvorrichtung auf, über welche die Zapfwelle mit einer zweiten Eingangswelle verbindbar ist, wobei die zweite Eingangswelle in Abhängigkeit der Drehzahl des Fahrantriebs betrieben wird, wodurch die Zapfwelle als Wegzapfwelle betreibbar ist. Die zweite Eingangswelle ist mit dem Antrieb für die Vorderräder verbindbar, wodurch auf einfache Weise die Antriebsvorrichtung für die Zapfwelle ausführbar ist. Da der Antrieb für die Vorderräder bereits achsversetzt zum Abtrieb des Schaltgetriebes angeordnet ist und hierfür meist ein Stirnradgetriebe verwendet wird, ist es möglich, diese Zahnräder ebenfalls für den Antrieb der Wegzapfwelle mit zu nutzen.

In einer weiteren Ausgestaltungsform der Erfindung ist eine Allradkupplung vorgesehen, über welche die Vorderräder des Traktors antreibbar sind. Die zweite Eingangswelle ist jedoch so mit der Allradkupplung verbunden, dass die Zapfwelle auch bei abgeschaltetem Vorderachsantrieb als Wegzapfwelle verwendbar ist.

In einer weiteren Ausgestaltungsform der Erfindung weist die Antriebsvorrichtung ein schaltbares Getriebe auf, mittels welchem vier Stufen für die Motorzapfwelle schaltbar sind. Dieses als Stirnradgetriebe ausgeführte Getriebe kann über ein einziges weiteres Zahnrad mit der zweiten Schaltvorrichtung verbunden werden, wodurch auf einfache Weise zwei schaltbare Gänge als Wegzapfwelle möglich sind.

Weitere Merkmale sind der Figurenbeschreibung zu entnehmen.

Die einzige Figur zeigt einen Zapfwellenstummel 1, welcher als Motorzapfwelle oder als Wegzapfwelle verwendbar ist. Eine erste Eingangswelle 2 ist mit einem nichtdargestellten Verbrennungsmotor, beispielsweise einem Dieselmotor, verbunden. Die erste Eingangswelle 2 kann hierbei ein nichtdargestelltes Schaltgetriebe, mittels welchem mehrere Gänge oder Gangstufen zum Fahrantrieb des Fahrzeugs schaltbar sind, durchdringen. Das Schaltgetriebe für den Fahrantrieb kann beispielsweise ein Lastschaltgetriebe sein, es besteht jedoch auch die Möglichkeit ein hydrostatisch mechanisches leistungsverzweigtes Stufenlosgetriebe zu verwenden. Die erste Eingangswelle 2 ist über die erste Schaltvorrichtung 3 mit der Welle 10 verbindbar. Über die vierte Schaltvorrichtung 9 kann die Welle 10 entweder mit dem vierten Zahnrad 8 oder mit dem dritten Zahnrad 7 drehfest verbunden werden. In der Mittelstellung der vierten Schaltvorrichtung 9 ist der Kraftfluss von der Welle 10 zum vierten Zahnrad 8 oder zum dritten Zahnrad 7 unterbrochen. Das vierte Zahnrad 8 kämmt mit dem zweiten Zahnrad 5 und das dritte Zahnrad 7 kämmt mit dem ersten Zahnrad 4. Über die dritte Schaltvorrichtung 6 kann entweder das erste Zahnrad 4 oder das zweite Zahnrad 5 mit dem Zapfwellenstummel 1 verbunden werden. Es besteht die Möglichkeit auch die dritte Schaltvorrichtung mit einer Mittelstellung, in welcher kein Kraftfluss zum Zapfwellenstummel 1 übertragen werden kann, auszustatten. Soll der Zapfwellenstummel in einer ersten Gangstufe als Motorzapfwelle betrieben werden, so wird die erste Schaltvorrichtung 3 im Schließsinne betätigt, so dass diese Drehmoment übertragen kann, und die vierte Schaltvorrichtung 9 so geschaltet, dass die Welle 10 mit dem vierten Zahnrad 8 verbunden ist um Drehmoment zu übertragen und die dritte Schaltvorrichtung so geschaltet ist, dass der Zapfwellenstummel 1 mit dem ersten Zahnrad 4 drehfest verbunden ist. Dies ist möglich, da das zweite Zahnrad 5 mit einem fünften Zahnrad 11 kämmt und das erste Zahnrad 4 mit einem sechsten Zahnrad 12 kämmt, wobei das fünfte Zahnrad 11 und das sechste Zahnrad 12 drehfest miteinander verbunden sind.

Der Zapfwellenstummel 1 wird als Motorzapfwelle in einem zweiten Gang betrieben, wenn die erste Schaltvorrichtung 3 im Schließsinne betätigt ist und die vierte Schaltvorrichtung 9 so geschaltet ist, dass das dritte Zahnrad 7 drehfest mit der Welle 10 verbunden ist und die dritte Schaltvorrichtung 6 so geschaltet ist, dass das erste Zahnrad 4 drehfest mit dem Zapfwellenstummel 1 verbunden ist.

In allen Gängen, in welchen der Zapfwellenstummel 1 als Motorzapfwelle betrieben wird, ist die zweite Schaltvorrichtung 13 im Öffnungssinne betätigt, so dass über diese kein Drehmoment übertragen werden kann.

Wird der Zapfwellenstummel 1 als Motorzapfwelle in einem dritten Gang betrieben, so ist die erste Schaltvorrichtung 3 im Schließsinne betätigt, die vierte Schaltvorrichtung 9 so geschaltet, dass das vierte Zahnrad 8 drehfest mit der Welle 10 verbunden ist und die dritte Schaltvorrichtung 6 so geschaltet, dass das zweite Zahnrad 5 drehfest mit dem Zapfwellenstummel 1 verbunden ist.

Um den Zapfwellenstummel 1 in einem vierten Gang als Motorzapfwelle zu betreiben, ist die erste Schaltvorrichtung 3 im Schließsinne betätigt und die vierte Schaltvorrichtung 9 so geschaltet, dass das dritte Zahnrad 7 drehfest mit der Welle 10 verbunden ist und die dritte Schaltvorrichtung 6 so geschaltet, dass das zweite Zahnrad 5 drehfest mit dem Zapfwellenstummel verbunden ist.

Da das fünfte Zahnrad 11 und das sechste Zahnrad 12 drehfest miteinander verbunden sind, besteht die Möglichkeit mit nur einem siebten Zahnrad 14 eine Wegzapfwelle auszubilden. Hierfür kämmt das siebte Zahnrad 14 mit dem sechsten Zahnrad 12. Es besteht auch die Möglichkeit, dass das siebte Zahnrad 14 mit dem fünften Zahnrad 11 kämmt. Das siebte Zahnrad 14 ist über eine zweite Schaltvorrichtung 13 mit der zweiten Eingangswelle 15 drehfest verbindbar. Eine Abtriebswelle 16 für den Fahrantrieb des nichtdargestellten Schaltgetriebes treibt einerseits über ein Ritzel 17 und ein Differenzial 18 ein Hinterrad 19, vorzugsweise eines Traktors, an. Ein weiteres Hinterrad befindet sich auf der gegenüberliegenden Seite und ist nicht dargestellt. Auf der Abtriebswelle 16 oder auf der Ritzelwelle 20 ist ein Zahnrad 21 einer Stirnradstufe 22 angeordnet. Hierbei kämmt das Zahnrad 21 mit dem ersten Stirnrad 23, welches drehfest mit dem zweiten Stirnrad 24 verbunden ist und wobei das zweite Stirnrad 24 mit dem dritten Stirnrad 25 kämmt. Das dritte Stirnrad 25 ist einerseits drehfest mit der Allradkupplung 27 und andererseits mit der zweiten Eingangswelle 15 verbunden. Ist die Allradkupplung 27 im Öffnungssinne betätigt, so wird auf die Abtriebswelle des Vorderrades 26 kein Drehmoment übertragen, ist die Allradkupplung 27 im Schließsinne betätigt, so wird die Abtriebswelle des Vorderrades 26 und somit auch das Vorderrad mit Drehmoment beaufschlagt. Somit kann bei im Schließsinne betätigter zweiten Schaltvorrichtung 13 und im Öffnungssinne oder Schließsinne betätigter Allradkupplung 27 und im Öffnungssinne, somit Neutralposition, betätigter vierten Schaltvorrichtung 9 der Zapfwellenstummel 1 als Wegzapfwelle verwendet werden. In einem ersten Gang der Wegzapfwelle ist die dritte Schaltvorrichtung 6 so geschaltet, dass das zweite Zahnrad 5 drehfest mit dem Zapfwellenstummel 1 verbunden ist. Ein zweiter Gang als Wegzapfwelle wird geschaltet, indem die dritte Schaltvorrichtung 6 so geschaltet ist, dass das erste Zahnrad 4 mit dem Zapfwellenstummel 1 verbunden ist.

Somit besteht die Möglichkeit, insbesondere für Schmalspurtraktoren, eine einfache kostengünstige Antriebsvorrichtung für die Zapfwelle zu schaffen, mittels welcher eine zweistufige Wegzapfwelle und eine vierstufige Motorzapfwelle möglich ist, wobei eine geringe Anzahl Komponenten verwendet wird, indem die Zahnräder der Stirnradstufe 22 sowohl für den Vorderradantrieb als auch für die Wegzapfwelle verwendet werden.

### Bezugszeichen

- 1: Zapfwellenstummel
- 2: erste Eingangswelle
- 3: erste Schaltvorrichtung
- 4: erstes Zahnrad
- 5: zweites Zahnrad
- 6: dritte Schaltvorrichtung
- 7: drittes Zahnrad
- 8: viertes Zahnrad
- 9: vierte Schaltvorrichtung
- 10: Welle
- 11: fünftes Zahnrad
- 12: sechstes Zahnrad
- 13: zweite Schaltvorrichtung
- 14: siebtes Zahnrad
- 15: zweite Eingangswelle
- 16: Abtriebswelle
- 17: Ritzel
- 18: Differenzial
- 19: Hinterrad
- 20: Ritzelwelle
- 21: Zahnrad
- 22: Stirnradstufe
- 23: erstes Stirnrad
- 24: zweites Stirnrad
- 25: drittes Stirnrad
- 26: Antriebswelle des Vorderrades
- 27: Allradkupplung

## Patentansprüche

1. Antriebsvorrichtung einer Zapfwelle mit einer ersten Schaltvorrichtung (3), über welche die Zapfwelle (1) im Sinne einer Motorzapfwelle mit einer ersten Eingangswelle (2) verbindbar ist, wobei die erste Eingangswelle (2) in Abhängigkeit einer Drehzahl eines Antriebsmotors betreibbar ist und die Zapfwelle (1) im Sinne einer Wegzapfwelle mit einer zweiten Schaltvorrichtung (13), über welche die Zapfwelle (1) mit einer zweiten Eingangswelle (15) verbindbar ist, wobei die zweite Eingangswelle (15) in Abhängigkeit einer Drehzahl eines Fahrantriebs betreibbar ist, **dadurch gekennzeichnet, dass** die zweite Eingangswelle (15) mit einem Antrieb für Vorderräder (26) verbindbar ist, wobei die Antriebsvorrichtung ein erstes Zahnrad (4) und ein zweites Zahnrad (5) aufweist, wobei das erste Zahnrad (4) und das zweite Zahnrad (5) auf der Zapfwelle (1) drehbar gelagert sind und das erste Zahnrad (4) über eine dritte Schaltvorrichtung (6) mit der Zapfwelle (1) verbindbar ist und das zweite Zahnrad (5) über die dritte Schaltvorrichtung (6) mit der Zapfwelle (1) verbindbar ist, **dadurch gekennzeichnet, dass** das erste Zahnrad (4) mit einem fünften Zahnrad (12) in kämmender Verbindung steht und das zweite Zahnrad (5) mit einem sechsten Zahnrad (11) in kämmender Verbindung steht, wobei das fünfte Zahnrad (12) und das sechste Zahnrad (11) drehfest verbunden sind und das fünfte Zahnrad (12) oder das sechste Zahnrad (11) mit einem siebten Zahnrad (14) in kämmender Verbindung steht und das siebte Zahnrad (14) über die zweite Schaltvorrichtung (13) mit der zweiten Eingangswelle (15) in Verbindung bringbar ist.

2. Antriebsvorrichtung nach Anspruch 1, **dadurch gekennzeichnet, dass** das erste Zahnrad (4) mit einem dritten Zahnrad (7) in kämmender Verbindung steht und das zweite Zahnrad (5) mit einem vierten Zahnrad (8) in kämmender Verbindung steht, wobei das dritte Zahnrad (7) über eine vierte Schaltvorrichtung (9) und die erste Schaltvorrichtung (3) mit der ersten Eingangswelle (2) in Verbindung bringbar ist und das vierte Zahnrad (8) über die vierte Schaltvorrichtung (9) und die erste Schaltvorrichtung (3) mit der ersten Eingangswelle (2) in Verbindung bringbar ist.

3. Hinterachse mit einer Antriebsvorrichtung nach Anspruch 1, **dadurch gekennzeichnet, dass** die Hinterachse eine Hinterachseingangswelle (16) und eine Ausgangswelle (26) zum Antrieb der Vorderräder und zwei Ausgangswellen zum Antrieb der Hinterräder aufweist, wobei die Ausgangswelle zum Antrieb der Vorderräder (26) über eine Allradkupplung (27) mit einem Antriebszahnrad (25) verbindbar ist und das Antriebszahnrad (25) mit der zweiten Eingangswelle (15) verbunden ist.

4. Hinterachse nach Anspruch 3, **dadurch gekennzeichnet, dass** die Hinterachse mit einem Schaltgetriebe verbunden ist, wobei die Hinterachseingangswelle (16) mit einer Abtriebswelle des Schaltgetriebes verbunden ist oder einstückig mit dieser ausgeführt ist.

5. Hinterachse nach Anspruch 4, **dadurch gekennzeichnet, dass** durch das Schaltgetriebe eine Welle hindurchgeführt ist, welche mit dem Antriebsmotor verbunden ist und mit der ersten Eingangswelle (2) verbunden ist oder mit dieser einstückig ausgeführt ist.

6. Hinterachse nach Anspruch 3, **dadurch gekennzeichnet, dass** die Hinterachse eine Ritzelwelle (20) aufweist, welche mit einem Differenzial (18) zusammenwirkt, wobei auf der Ritzelwelle (20) ein Zahnrad (21) einer Stirnradstufe (22) angeordnet ist, wobei die Stirnradstufe (22) mit der Allradkupplung (27) zusammenwirkt.

## Claims

1. Drive apparatus for a power take-off shaft having a first shifting apparatus (3), via which the power take-off shaft (1) can be connected in the sense of an engine power take-off shaft to a first input shaft (2), it being possible for the first input shaft (2) to be operated in a manner which is dependent on a rotational speed of a drive engine, and the power take-off shaft (1) can be connected in the sense of a ground-speed power take-off shaft to a second shifting apparatus (13), via which the power take-off shaft (1) can be connected to a second input shaft (15), it being possible for the second input shaft (15) to be operated in a manner which is dependent on a rotational speed of a traction drive, **characterized in that** the second input shaft (15) can be connected to a drive for front wheels (26), the drive apparatus having a first gearwheel (4) and a second gearwheel (5), the first gearwheel (4) and the second gearwheel (5) being mounted rotatably on the power take-off shaft (1), and it being possible for the first gearwheel (4) to be connected via a third shifting apparatus (6) to the power take-off shaft (1), and it being possible for the second gearwheel (5) to be connected via the third shifting apparatus (6) to the power take-off shaft (1), **characterized in that** the first gearwheel (4) is in a meshing connection with a fifth gearwheel (12), and the second gearwheel (5) is in a meshing connection with a sixth gearwheel (11), the fifth gearwheel (12) and the sixth gearwheel (11) being connected fixedly so as to rotate to one another, and the fifth gearwheel (12) or the sixth gearwheel (11) being in a meshing connection with a seventh gearwheel (14), and it being possible for the seventh gearwheel (14) to be brought into a connection with the second input shaft (15) via the second shifting apparatus (13).

2. Drive apparatus according to Claim 1, **characterized in that** the first gearwheel (4) is in a meshing connection with a third gearwheel (7), and the second gearwheel (5) is in a meshing connection with a fourth gearwheel (8), it being possible for the third gearwheel (7) to be brought into a connection with the first input shaft (2) via a fourth shifting apparatus (9) and the first shifting apparatus (3), and it being possible for the fourth gearwheel (8) to be brought into a connection with the first input shaft (2) via the fourth shifting apparatus (9) and the first shifting apparatus (3).

3. Rear axle having a drive apparatus according to Claim 1, **characterized in that** the rear axle has a rear axle input shaft (16) and an output shaft (26) for driving the front wheels and two output shafts for driving the rear wheels, it being possible for the output shaft to be connected to a drive gearwheel (25) via an all wheel drive clutch (27) in order to drive the front wheels (26), and the drive gearwheel (25) being connected to the second input shaft (15).

4. Rear axle according to Claim 3, **characterized in that** the rear axle is connected to a manual transmission, the rear axle input shaft (16) being connected to a driven shaft of the manual transmission or being configured in one piece with the latter.

5. Rear axle according to Claim 4, **characterized in that** a shaft is guided through the manual transmission, which shaft is connected to the drive engine and is connected to or is configured in one piece with the first input shaft (2).

6. Rear axle according to Claim 3, **characterized in that** the rear axle has a pinion shaft (20) which interacts with a differential (18), a gearwheel (21) of a spur gear stage (22) being arranged on the pinion shaft (20), the spur gear stage (22) interacting with the all wheel drive clutch (27).

## Revendications

1. Dispositif d'entraînement d'une prise de force avec un premier dispositif de commutation (3), par lequel la prise de force (1) au sens d'une prise de force moteur peut être reliée à un premier arbre d'entrée (2), dans lequel le premier arbre d'entrée (2) peut fonctionner en fonction d'une vitesse de rotation d'un moteur d'entraînement et la prise de force (1) au sens d'une prise de force proportionnelle à l'avancement est dotée d'un deuxième dispositif de commutation (13), par lequel la prise de force (1) peut être reliée à un second arbre d'entrée (15), dans lequel le second arbre d'entrée (15) peut fonctionner en fonction d'une vitesse de rotation d'un entraînement de marche, **caractérisé en ce que** le second arbre d'entrée (15) peut être relié à un entraînement pour des roues avant (26), dans lequel le dispositif d'entraînement présente une première roue dentée (4) et une deuxième roue dentée (5), dans lequel la première roue dentée (4) et la deuxième roue dentée (5) sont montées de façon rotative sur la prise de force (1) et la première roue dentée (4) peut être reliée à la prise de force (1) par un troisième dispositif de commutation (6) et la deuxième roue dentée (5) peut être reliée à la prise de force (1) par le troisième dispositif de commutation (6), **caractérisé en ce que** la première roue dentée (4) est en prise avec une cinquième roue dentée (12) et la deuxième roue dentée (5) est en prise avec une sixième roue dentée (11), dans lequel la cinquième roue dentée (12) et la sixième roue dentée (11) sont reliées de façon calée en rotation et la cinquième roue dentée (12) ou la sixième roue dentée (11) est en prise avec une septième roue dentée (14) et la septième roue dentée (14) peut être mise en relation avec le second arbre d'entrée (15) au moyen du deuxième dispositif de commutation (13).

2. Dispositif d'entraînement selon la revendication 2, **caractérisé en ce que** la première roue dentée (4) est en prise avec une troisième roue dentée (7) et la deuxième roue dentée (5) est en prise avec une quatrième roue dentée (8), dans lequel la troisième roue dentée (7) peut être mise en relation avec le premier arbre d'entrée (2) au moyen d'un quatrième dispositif de commutation (9) et du premier dispositif de commutation (3) et la quatrième roue dentée (8) peut être mise en relation avec le premier arbre d'entrée (2) au moyen du quatrième dispositif de commutation (9) et du premier dispositif de commutation (3) .

3. Essieu arrière avec un dispositif d'entraînement selon la revendication 1, **caractérisé en ce que** l'essieu arrière présente un arbre d'entrée d'essieu arrière (16) et un arbre de sortie (26) pour l'entraînement des roues avant et deux arbres de sortie pour l'entraînement des roues arrière, dans lequel l'arbre de sortie pour l'entraînement des roues avant (26) peut être relié à une roue dentée d'entraînement (25) par un accouplement général (27) et la roue dentée d'entraînement (25) est reliée au second arbre d'entrée (15).

4. Essieu arrière selon la revendication 3, **caractérisé en ce que** l'essieu arrière est relié à une boîte de vitesses, dans lequel l'arbre d'entrée d'essieu arrière (16) est relié à un arbre de sortie de la boîte de vitesses ou est réalisé d'une pièce avec celui-ci.

5. Essieu arrière selon la revendication 4, **caractérisé en ce qu'**un arbre est mené à travers la boîte de vitesses, est relié au moteur d'entraînement et est relié au premier arbre d'entrée (2) ou est réalisé d'une pièce avec celui-ci.

6. Essieu arrière selon la revendication 3, **caractérisé en ce que** l'essieu arrière présente un arbre de pignon (20), qui coopère avec un différentiel (18), dans lequel une roue dentée (21) d'un étage de roues droites (22) est disposée sur l'arbre de pignon (20), dans lequel l'étage de roues droites (22) coopère avec l'accouplement général (27) .
